# EUROPEAN PATENT SPECIFICATION

(11) **EP 3 695 730 B1**
(45) Date of publication and mention of the grant of the patent: **03.04.2024**
(21) Application number: 20162986.2
(22) Date of filing: 16.12.2014
(51) Int. Cl.: A23G 1/00, A23G 1/54, A23G 1/48, A23G 1/20, A23G 1/22, A23G 1/50

(54) **CHOCOLATE PRODUCT HAVING VISIBLE EDIBLE NON-CHOCOLATE INCLUSIONS AND METHOD FOR OBTAINING IT**
SCHOKOLADENPRODUKT MIT SICHTBAREN ESSBAREN NICHT-SCHOKOLADE-EINSCHLÜSSEN UND VERFAHREN ZU SEINER HERSTELLUNG
PRODUIT EN CHOCOLAT COMPORTANT DES INCLUSIONS VISIBLES COMESTIBLES NON CHOCOLATÉES ET SON PROCÉDÉ D'OBTENTION

(30) Priority: 20.12.2013 EP 13199029
(43) Date of publication of application: 19.08.2020
(62) Divisional of application: 14812531.3
(73) Proprietor: Société des Produits Nestlé S.A., 1800 Vevey (CH)
(72) Inventor: GROLIMUND, Daniel, 3065 BOLLIGEN (CH); CLEMENT, Patrick, 1661 LE PÂQUIER-MONTBARRY (CH); SAVARY, François, 1618 CHÂTEL-ST-DENIS (CH)
(74) Representative: Slaven, John William

(56) References cited:
- DE-U1- 8 707 301
- GB-A- 191 218 424
- GB-A- 191 218 438
- US-A1- 2010 196 548
- US-A1- 2013 251 856
- DATABASE GNPD [Online] MINTEL; December 2001 (2001-12), anonymus: "Dark chocolate bar with nuts", XP002727162, Database accession no. 124939
- J Chevalley ET AL: "REVIEW PAPER RHEOLOGY OF CHOCOLATE", , 5 November 1974 (1974-11-05), XP055129452, Retrieved from the Internet: URL:http://onlinelibrary.wiley.com/store/1 0.1111/j.1745-4603.1975.tb01247.x/asset/j. 1745-4603.1975.tb01247.x.pdf?v=1&t=hxoshl3 q&s=a75330e8b68313313791ddcdcff80cd2af2836 70 [retrieved on 2014-07-16]

## Description

### 1. Field of the invention

The present invention relates to a method for manufacturing a chocolate product, in particular chocolate tablets or chocolate bars, having visible edible non-chocolate inclusions at an external surface, as well as to chocolate product obtained e.g. by such a method.

### 2. Technical background

From the prior art, molds and methods for manufacturing chocolate products (*e.g.* chocolate tablets or chocolate bars) are well-known. For manufacturing a chocolate product, usually a mold (*e.g.* a rigid or an elastic plastic mold) is filled with heated chocolate which can be removed from the mold after the chocolate cooled down (*i.e.* after the chocolate solidified), thereby obtaining a respective chocolate product. Molds and methods for manufacturing a chocolate product are, for example, disclosed in documents EP 0 429 853 A2 and EP 0 630 574 A1.

US 2013/251856 A1 discloses methods to obtain chocolate having multiple pearls of flavour distributed evenly throughout the base of chocolate, using a mold.

Moreover, from the prior art, it is also known to add fruits or fruit pieces (e.g. nuts or raisins) to the chocolate. Usually, such ingredients are added to the heated chocolate, before the heated chocolate is casted into the mold. Thereby, an essentially uniform distribution of the fruits or fruit pieces within the chocolate product is provided.

However, by means of the known methods for manufacturing chocolate products, no chocolate product can be provided having predetermined visible fruit inclusions.

Visible fruit inclusions means that the fruits or fruit pieces are visible at an external surface of the chocolate product, *i.e.* that at least a portion of the fruits or fruit pieces facing to an external surface of the chocolate product is not covered with chocolate material, but is visible for a consumer.

Therefore, it is an object of the present invention to provide a mold for manufacturing a chocolate product, in particular chocolate tablets or chocolate bars, having such visible fruit inclusions. In addition, it is also an object of the present invention to provide a method for manufacturing such a chocolate product and further to provide such a chocolate product.

These and other objects, which become apparent upon reading the following description, are solved by the subject-matter of the independent claims. The dependent claims refer to preferred embodiments of the invention.

### 3. Summary of the invention

According to the invention, a method for manufacturing a chocolate product, in particular chocolate tablets or chocolate bars, having visible edible non-chocolate inclusions, which comprise nuts, is provided, using a mold, wherein the mold comprises at least one cavity element in which the inclusions and heated chocolate can be filled, wherein the cavity element comprises a curved bottom section and (preferably two) adjacent side wall sections extending from the bottom section to an upper side of the mold. According to the invention, the cavity element has the following dimensions:
- a maximum depth between 10 and 80 mm (preferably between 10 and 70 mm or 15 and 70 mm, more preferably between 10 and 50 mm or 20 and 50 mm);
- a maximum width between 8 and 100 mm (preferably between 15 and 80 mm, more preferably between 20 and 50 mm or 25 and 50 mm), wherein the ratio of the maximum depth to the maximum width is between 0.3 and 1.2 (preferably between 0.5 and 1.0, more preferably between 0.6 and 0.8);
- the curved bottom section has a radius between 4 and 50 mm (preferably between 5 and 40 mm or 10 and 40 mm, more preferably between 5 and 30 mm or 20 and 30 mm);
- the side wall sections extends from the upper side of the mold to a depth between 4 and 70 mm (preferably between 5 and 60 mm or 15 and 60 mm, more preferably between 5 and 40 mm or 25 and 40 mm).

As mentioned above, the term "visible inclusions", comprising nuts, fruits, dried fruit etc., means that the preferably particulate inclusions are visible at an external surface of the chocolate product, i.e. that at least a portion of the fruits or fruit pieces facing to an external surface of the chocolate product is not covered with chocolate material, but is visible for a consumer. The inclusions are visible on the profiled side of the chocolate product which is opposed to the flat bottom side.

Within the context of the present invention, the term "profiled side" of the chocolate product indicates the side, aspect or surface which is opposed to the flat bottom side and which is shaped by moulding in the moulds according to the present invention. For the sake of clarity, the profiled side of the chocolate corresponds to that side, aspect or surface of the product which, during the moulding process, is in contact with the mould surface.

Notably, the respective depth is measured from the upper side of the mold (*e.g.* from the scraping surface). The term upper side of the mold has to be understood as the usually horizontal upper surface of the mold, which is not covered with heated chocolate, but usually provides a scrapper surface/edge (*i.e.* a scrapper blade can be arranged at the upper side of the mold and the chocolate protruding the cavity element can be scrapped off).

The term cavity element has to be understood as any suitable form having the above mentioned dimensions which can be filled with heated chocolate and fruits or fruit pieces comprising a curved bottom section (*i.e.* a section which is at least partially cylindrical or spherical shaped) and two adjacent sidewall sections arranged above the curved bottom section. Preferably, the cavity element comprises two further side wall sections (*e.g.* a front and a rear side wall section) extending from the upper side of the mold to the maximum depth of the cavity element.

Many experiments have been carried out in order to establish that the above-mentioned dimensions of a cavity element allow manufacturing a chocolate product having visible fruit inclusions, wherein a heated chocolate was used having a viscosity between 1000 and 15000 mPas. As a result, the heated chocolate did not flow in all spaces between the mold *(i.e.* the curved bottom section) and the fruits or fruit pieces arranged thereon such that the visible fruit inclusions of the chocolate product remained.

A skilled person understands that in particular the radius of the curved bottom section could be adapted to the specific fruits or fruit pieces (*i.e.* in particular to the average sizes of the fruits or fruit pieces) used for manufacturing a respective chocolate product, thereby adjusting the space/angles between the curved bottom section and the fruits or fruit pieces. However, a respective adjustment of the impression of a chocolate product (*i.e.* the impression of the visible fruit inclusions) can also be made by varying the other above-mentioned dimensions and in particular by varying the viscosity of the heated chocolate and of the specific sizes of the fruits or fruit pieces.

It is preferred that the sidewall sections (*e.g.* the wall sections extending from the upper side of the mold to the curved bottom section and the rear and front wall sections extending from the upper side of the mold to the maximum depth of the cavity element) are inclined by at least 5° DEG (preferably by at least 10° DEG, more preferably by at least 20° DEG) with respect to a vertical line. Thereby, removing of the solidified chocolate from the mold can be facilitated.

It is further preferred that the curved bottom section is at least partially cylindrical or spherical shaped. Preferably, the length of the cavity element is at least 10 mm (preferably at least 15 mm, more preferably at least 20 mm). It is further preferred that the cavity element has in top view an essentially rectangular and elongated shape. Thereby, elongated chocolate bars can be provided..

Preferably, the mold comprises at least two adjacent cavity elements, wherein at least two adjacent sidewall sections of the two adjacent cavity elements converge at a depth between 4 and 70 mm (preferably between 10 and 50 mm, more preferably between 20 and 30 mm) in such a way that a curved middle section between two adjacent cavity elements is formed. In other words, it is possible to arrange two adjacent cavity elements such that two adjacent sidewall sections of the adjacent cavity elements do not extend to the upper side of the mold, but intersect at a depth between 4 and 70 mm, thereby providing a predetermined breaking line for a later molded chocolate product. Preferably, the curved middle section provided by the converging two adjacent side wall sections has a radius between 0.5 and 5 mm (preferably between 1 and 4 mm, more preferably between 2 and 3 mm).

It is further preferred that the mold comprises at least one curved notch section for providing a (further) predetermined breaking line for a molded chocolate product. Such a notch section can be, for example, provided transversal of an elongated cavity element. The curved notch section is preferable provided at a depth between the depth of the side wall sections and the maximum depth of the cavity element. It is particularly preferred that the curved notch section ends in an interval between at least 1 mm above the maximum depth of the cavity element and at least 1 mm under the depth of the curved middle section.

In one embodiment of the present invention, the mold comprises several adjacent cavity elements which may be aligned along the axis of their length or width. In a further embodiment, the mold comprises several adjacent lines of aligned cavity elements.

In a preferred embodiment, a mould is provided for a bar or a tablet comprising several adjacent cavity elements.

Finally, it is preferred that the mold is made from an elastic or rigid plastic material, wherein it is preferred that the mold is provided as an integral part.

The present invention relates to a method for manufacturing a chocolate product, in particular, chocolate tablets or chocolate bars having visible food inclusions comprising at least the flowing steps:
- providing a mold as described above;
- providing inclusions comprising nuts, wherein the inclusions have an average size between 1 and 50 mm (preferable between 2 and 40 mm, and even more preferable between 5 and 25 mm);
- providing heated chocolate having a viscosity between 1000 and 15000 mPas (preferably between 5000 and 10000 mPas);
- distributing the inclusions on the mold such that the inclusions rest at least partially in the curved bottom section of the at least one cavity element of the mold;
- depositing the heated chocolate in the mold such that the arranged nuts essentially keep in place;
- cooling the heated chocolate until the chocolate solidifies;
- removing the solidified chocolate from the mold.

Notably, the heated chocolate can be milk, dark and/or white chocolate, as long as the viscosity is between the above mentioned range.

It is further preferred that after depositing the heated chocolate, the mold is vibrated, thereby providing a homogenous distribution of the heated chocolate in the mold. However, in this respect it has to be noted that the vibration is performed in such a way that the inclusions keep in place and are not shaken too much since then the heated chocolate may flow in the entire spaces between the inclusions and the curved bottom section, thereby covering the inclusions completely.

Preferably, the inclusions comprising nuts distributed in the mold are Hazelnuts, Almonds, Brazil Nuts, Cashew nuts, or mixtures thereof with soft fruits (e.g. Raisins, Cranberries, Blue Berries, Blackcurrant, apples, pear, orange, apricot, etc.) or crispy inclusions (e.g. caramel, coffee, biscuits, etc.) . Preferably, the soft fruit is dried fruit.

The present invention further relates to a chocolate product, in particular chocolate tablets or chocolate bars, having visible inclusions comprising nuts provided by a method described-above and using a mold described-above.

Preferably, the chocolate product comprises between 25 and 70%, more preferable between 30 and 60%, and even more preferably between 40 and 50%, visible nuts inclusions with respect to the external surface of the chocolate product, preferably with respect to the upper surface of the chocolate product.

### 4. Description of the preferred embodiments

In the following, the invention is described exemplarily with reference to the enclosed figures, in which
- **Figure 1**: is a schematic underside view showing a mold according to a first embodiment of the invention;
- **Figure 2**: is a schematic side view of the first embodiment of the invention;
- **Figure 3**: is a schematic side view of the first embodiment of the invention;
- **Figure 4**: is a schematic underside view showing a mold according to a second embodiment of the invention;
- **Figure 5**: is a schematic side view of the second embodiment of the invention;
- **Figure 6**: is a schematic side view of the second embodiment of the invention;
- **Figure 7**: is a schematic underside view showing a mold according to a third embodiment of the invention;
- **Figure 8**: is a schematic side view of the third embodiment of the invention;
- **Figure 9**: is a schematic side view of the third embodiment of the invention;
- **Figure 10**: is a schematic top view of a chocolate product according to the invention.

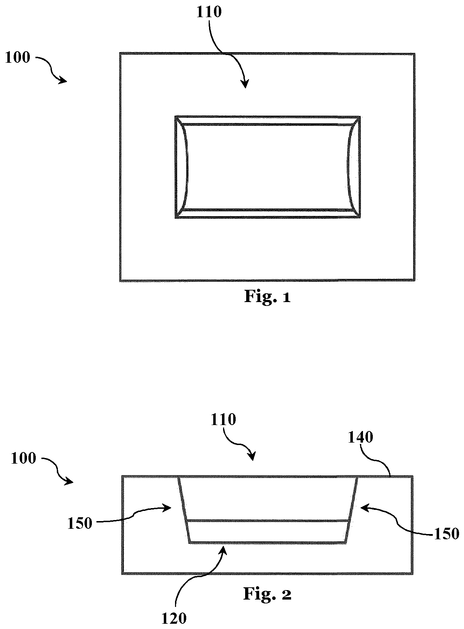

Figures 1 to 3 are schematic views of a mold 100, for manufacturing a chocolate product, in particular chocolate tablets or chocolate bars, having visible fruit inclusions.

As can be taken from figure 1, the mold 100 is in top view essentially rectangular-shaped comprising a cavity element iio into which fruits and chocolate can be filled.

The cavity element 110 comprises a curved bottom section 120. At the elongated side of the cavity element 110, two side wall sections 130 are arranged extending from the curved bottom section 120 to an upper side 140 of the mold 100. At the short sides of the cavity element 110 two further side wall sections (i.e. a rear and a front side wall section) 150 are arranged extending from the maximum depth of the cavity element 110 to the upper side 140 of the mold 100.

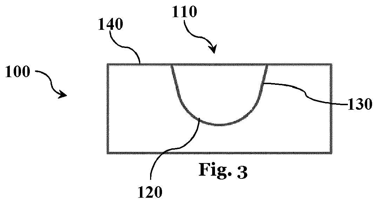

In the shown preferred embodiment, the curved bottom section 120 is a cylinder cutout. Alternatively, the curved bottom sections 120 can be provided at least partial spherical. As can be seen in particular in figure 3, in the shown preferred embodiment, the side wall sections 130 are arranged tangentially with respect to the curved bottom section 120 extending to the upper side 140 of the mold 110.

In the preferred embodiment, the cavity element 110 has a maximum depth of 14 mm and a maximum width of 22.5 mm, wherein the ratio of the depth to the width is 0.622 (14 mm : 22.5 mm). The length of this embodiment is about 38.25 mm. In the shown preferred embodiment, the radius of the curved bottom section 120 is about 11 mm. The side wall sections 130 extend from the upper side 140 of the mold 100 to a depth of about 6.5 mm, wherein the rear and front side wall sections 150 extend from the upper side 140 of the mold 100 to a depth of 14 mm (i.e. to the maximum depth of the cavity element 110). As can be further taken from figures 2 and 3, the (four) sidewall sections 130, 150 are inclined by about 20° DEG with respect to the vertical.

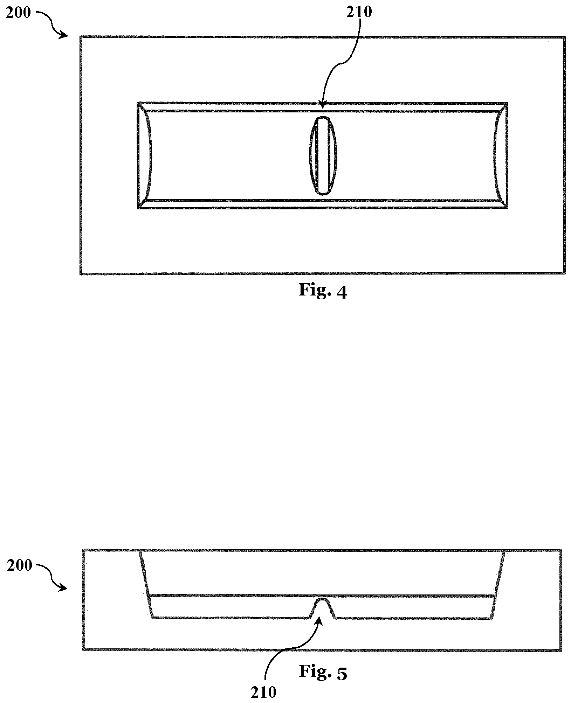

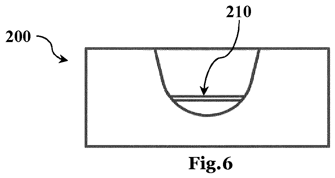

Figures 4 to 6 are schematic views of a mold 200, for manufacturing a chocolate product, in particular chocolate tablets or chocolate bars, having visible fruit inclusions.

In contrast to the mold 100 shown in figures 1 to 3, the mold 200 shown in figure 4 to 6 comprises a curved notch section 210 providing a predetermined breaking line for a molded chocolate product, wherein the shown curved notch section 210 extends from the maximum depth of the cavity element (*i.e.* in the preferred embodiment having a depth of about 14 mm) to a depth of about 8 mm. Notably, such curved notch sections 210 can be provided at every suitable position (*i.e.* at every position a predetermined breaking line for a product should be provided).

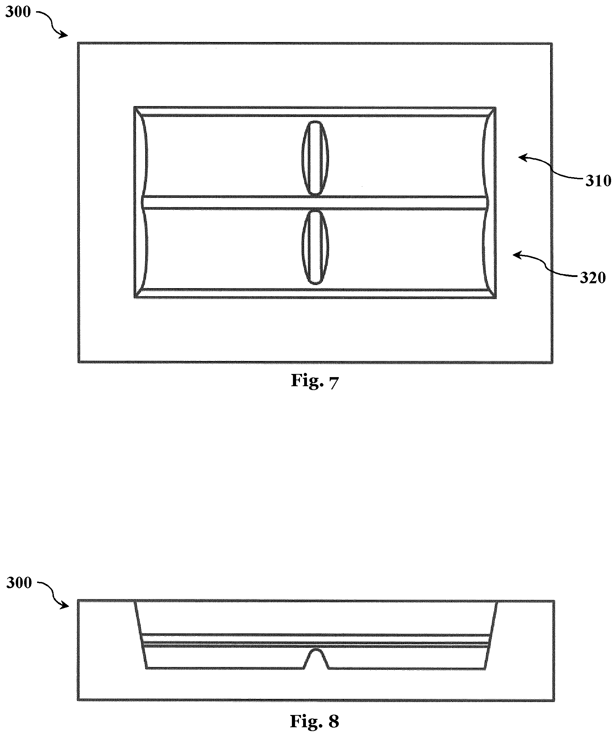

Figures 7 to 9 are schematic views of a mold 300, according to a third embodiment of the invention, for manufacturing a chocolate product, in particular chocolate tablets or chocolate bars, having visible fruit inclusions.

In contrast to the embodiments shown in figures 1 to 6, the mold 300 comprises two adjacent cavity elements 310, 320 each having a respective curved bottom section 330, 340.

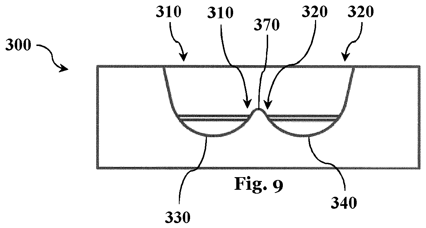

As can be taken from figure 9, two adjacent sidewall sections 350, 360 of the two adjacent cavity elements 310, 320 converge to a curved middle-section 370 at a depth of about 5.5 mm, wherein the curved middle-section 370 has a radius of about 1.25 mm.

Thereby, in case a chocolate tablet or a chocolate bar having two adjacent cavity elements 310, 320 a further predetermined breaking line for a molded chocolate product can be provided.

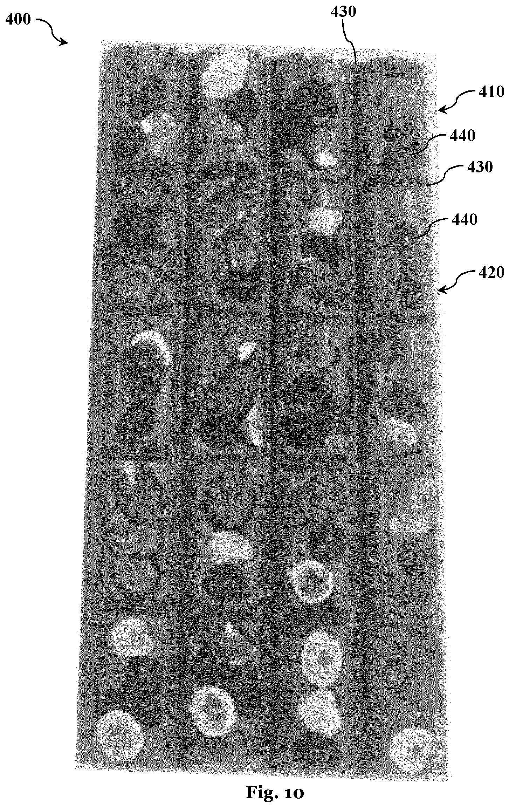

Figure 10 shows a chocolate tablet 400 provided by a method according to the present invention using a corresponding mold (*i.e.* a mold having several adjacent cavity elements and several curved notch sections providing respective predetermined breaking lines).

The chocolate tablet 400 comprises several chocolate sections 410, 420 between respective breaking lines 430 are provided. As can be seen in figure 10, the chocolate tablet 400 comprises visible fruit inclusions 440 (*e.g.* visible nuts and raisins) which are not covered by chocolate, wherein the chocolate tablet 400 comprises about 60% visible fruit inclusions with respect to the upper surface of the chocolate tablet.

For manufacturing the chocolate tablet 400 shown in figure 10 at least the following steps have to be performed:
At the beginning a mold, fruits or fruit pieces (*e.g.* hard fruits or soft fruits or a mixture thereof), and heated chocolate having a viscosity between 1000 and 15000 mPas have to be provided.

In a subsequent step, the fruits or fruit pieces are distributed on the surface of the mold such that the fruits rest at least partially in the curved bottom sections of the cavity elements of the mold, wherein an essentially equal distribution of the fruits or fruit pieces is preferred.

Subsequently, the heated chocolate is equally deposited in the mold such that the arranged fruits are completely covered by the chocolate. However, the heated chocolate should be applied such that the fruits or fruit pieces essentially keep in place.

As next step, it is preferred to gently vibrate the mold filled with fruits and chocolate in order to provide a homogeneous distribution of the heated chocolate in the mold. Optionally, the exceeding chocolate can be scrapped off, for example, by means of a scraping blade slided over the upper surface of the mold.

Subsequently, the filled mold is cooled down until the chocolate solidifies. Finally, the solidified chocolate can be removed from the mold by a common demoulding step (*e.g.* by means of vibration applied to the mold).

It should be clear to a skilled person that the embodiments shown in the figures above are preferred embodiments, but that, however, also different molds having different dimensions can be used, as long as the dimensions of the cavity element are within the subsequently claimed dimensions, which have been established by various experiments and with which a chocolate product having visible fruit inclusions can be provided.

## Claims

1. Method for manufacturing a chocolate product (400), in particular chocolate tablets or chocolate bars, having visible preferably particulate inclusions (440) made from an edible non-chocolate material, comprising at least the following steps:
- providing a mold (100, 200, 300);
- providing inclusions comprising nuts;
- providing heated chocolate having a viscosity between 1000 and 15000 mPas, preferably between 2500 and 12000 mPas, and even more preferably between 5000 and 10000 mPas;
- distributing the inclusions on the mold (100, 200, 300) such that the inclusions rest at least partially in the curved bottom section of the at least one cavity element (110, 310, 320) of the mold (100, 200, 300);
- depositing the heated chocolate in the mold (100, 200, 300) such that the arranged nuts essentially keep in place;
- cooling the heated chocolate until the chocolate solidifies;
- removing the solidified chocolate from the mold (100, 200, 300). wherein the mold (100, 200, 300) comprises at least one cavity element (110, 310, 320) in which inclusions and chocolate can be filled, wherein the cavity element (110, 310, 320) comprises a curved bottom section (120, 330, 340) and at least one adjacent side wall section (130, 350, 360) extending from the curved bottom section (120, 330, 340) to an upper side (140) of the mold (100, 200, 300), wherein the cavity element (110, 310, 320) has the following dimensions:
- a maximum depth between 10 and 80 mm;
- a maximum width between 8 and 100 mm, wherein the ratio of the maximum depth to the maximum width is between 0.3 and 1.2;
- the curved bottom section (120, 330, 340) has a radius between 4 and 50 mm;
- the at least one side wall section (130, 350, 360) extends from the upper side (140) of the mold (100, 200, 300) to a depth between 4 and 70 mm.

2. Method according to claim 1, wherein the curved bottom section (120, 330, 340) is at least partially cylindrical or spherical shaped.

3. Method according to one of the claims 1 or 2, wherein the side wall sections (130, 150, 350, 360) are inclined by at least 5° DEG with respect a vertical line.

4. Method according to any of the preceding claims, wherein the length of the cavity element (110, 310, 320) is at least 10 mm.

5. Method according to any of the preceding claims, wherein the mold (300) comprises at least two adjacent cavity elements (310, 320), wherein at least two adjacent side wall sections (350, 360) of the two adjacent cavity elements (310, 320) converge at a depth between 4 and 70 mm forming a curved middle section (370).

6. Method to claim 5, wherein the curved middle section (370) has a radius between 0.5 and 5 mm.

7. Method according to any of the preceding claims, wherein the mold (100, 200, 300) comprises at least one curved notch section (210) for providing a predetermined breaking line (430) for a molded chocolate product (400).

8. Method according to claim 7, wherein the curved notch section (210) is provided at a depth between the depth of the side wall sections (120, 350, 360) and the maximum depth of the cavity element (310, 320), wherein preferably the curved notch section (210) ends in an interval between at least 1 mm above the maximum depth of the cavity element (310, 320) and/or at least 1 mm under the curved middle section (370) of two adjacent cavity elements (310, 320).

9. Method according to any of the preceding claims, wherein the inclusions have an average size between 1 and 50 mm, preferably between 2 and 40 mm and even more preferably between 5 and 25 mm.

10. Method according to any of the preceding claims, wherein after depositing the heated chocolate, a vibration step is provided facilitating a homogenous distribution of the heated chocolate in the mold (100, 200, 300).

11. Method according to any of the preceding claims wherein the inclusions distributed in the mold (100, 200, 300) are Hazelnuts, Almonds, Brazil nuts, Cashew nuts, or mixtures thereof with soft fruits, preferably Raisins, Cranberries, Blueberries.

12. Chocolate product (400) having a flat bottom side and a profiled side opposed to the flat bottom side,
wherein on the profiled side inclusions are embedded in chocolate material such that they are visible and the outer side of the inclusions follows the profiled contour of the profiled side,
the inclusions being nuts,
wherein the chocolate product has a height *h* measured from the flat bottom to the highest peak of the profiled side,
wherein the inclusions are only incorporated in a distance of less than 0.5 *h,* preferably less than 0.3 *h,*
but more than 0.05 *h*, preferably more than *0.1 h.*

13. Chocolate product according to claim 12, wherein the inclusions represent at least 25%, preferably at least 30%, even more preferred more than 40% and preferably less than 95%, of the surface of the profiled side, the rest being chocolate material.

## Patentansprüche

1. Verfahren zum Fertigen eines Schokoladenprodukts (400), insbesondere Schokoladentafeln oder Schokoladenriegeln, das sichtbare, vorzugsweise partikelförmige Einschlüsse (440) aufweist, die aus einem essbaren Nicht-Schokolade-Material hergestellt sind, umfassend mindestens die folgenden Schritte:
- Bereitstellen einer Form (100, 200, 300);
- Bereitstellen von Einschlüssen, umfassend Nüsse;
- Bereitstellen von erwärmter Schokolade, die eine Viskosität zwischen 1000 und 15000 mPas, vorzugsweise zwischen 2500 und 12000 mPas und noch mehr bevorzugt zwischen 5000 und 10000 mPas aufweist;
- Verteilen der Einschlüsse auf der Form (100, 200, 300), derart, dass die Einschlüsse mindestens teilweise in dem gebogenen unteren Abschnitt des mindestens einen Hohlraumelements (110, 310, 320) der Form (100, 200, 300) liegen;
- Ablegen der erwärmten Schokolade in die Form (100, 200, 300), derart, dass die angeordneten Einschlüsse im Wesentlichen in Position gehalten werden;
- Abkühlen der erwärmten Schokolade, bis die Schokolade fest wird;
- Entfernen der fest gewordenen Schokolade aus der Form (100, 200, 300).
wobei die Form (100, 200, 300) mindestens ein Hohlraumelement (110, 310, 320) umfasst, in dem die Einschlüsse und die Schokolade gefüllt werden können, wobei das Hohlraumelement (110, 310, 320) einen gebogenen unteren Abschnitt (120, 330, 340) und mindestens einen angrenzenden Seitenwandabschnitt (130, 350, 360) umfasst, der sich von dem gebogenen unteren Abschnitt (120, 330, 340) zu einer oberen Seite (140) der Form (100, 200, 300) erstreckt, wobei das Hohlraumelement (110, 310, 320) die folgenden Abmessungen aufweist:
- eine maximale Tiefe zwischen 10 und 80 mm;
- eine maximale Breite zwischen 8 und 100 mm, wobei das Verhältnis der maximalen Tiefe zu der maximalen Breite zwischen 0,3 und 1,2 liegt;
- der gebogene untere Abschnitt (120, 330, 340) einen Radius zwischen 4 und 50 mm aufweist;
- der mindestens eine Seitenwandabschnitt (130, 350, 360) sich von der oberen Seite (140) der Form (100, 200, 300) zu einer Tiefe zwischen 4 und 70 mm erstreckt.

2. Verfahren nach Anspruch 1, wobei der gebogene untere Abschnitt (120, 330, 340) mindestens teilweise zylindrisch oder kugelförmig ist.

3. Verfahren nach einem der Ansprüche 1 oder 2, wobei die Seitenwandabschnitte (130, 150, 350, 360) um mindestens 5° Grad in Bezug auf eine vertikale Linie geneigt sind.

4. Verfahren nach einem der vorstehenden Ansprüche, wobei die Länge des Hohlraumelements (110, 310, 320) mindestens 10 mm beträgt.

5. Verfahren nach einem der vorstehenden Ansprüche, wobei die Form (300) mindestens zwei angrenzende Hohlraumelemente (310, 320) umfasst, wobei mindestens zwei angrenzende Seitenwandabschnitte (350, 360) der zwei angrenzenden Hohlraumelemente (310, 320) in einer Tiefe zwischen 4 und 70 mm zum Ausbilden eines gebogenen mittleren Abschnitts (370) konvergieren.

6. Verfahren nach Anspruch 5, wobei der gebogene mittlere Abschnitt (370) einen Radius zwischen 0,5 und 5 mm aufweist.

7. Verfahren nach einem der vorstehenden Ansprüche, wobei die Form (100, 200, 300) mindestens einen gebogenen Kerbenabschnitt (210) zum Bereitstellen einer Sollbruchlinie (430) für ein geformtes Schokoladenprodukt (400) umfasst.

8. Verfahren nach Anspruch 7, wobei der gebogene Kerbenabschnitt (210) in einer Tiefe zwischen der Tiefe der Seitenwandabschnitte (120, 350, 360) und der maximalen Tiefe des Hohlraumelements (310, 320) bereitgestellt ist, wobei vorzugsweise der gebogene Kerbenabschnitt (210) in einem Intervall zwischen mindestens 1 mm oberhalb der maximalen Tiefe des Hohlraumelements (310, 320) und/oder mindestens 1 mm unter dem gebogenen mittleren Abschnitt (370) der zwei angrenzenden Hohlraumelemente (310, 320) endet.

9. Verfahren nach einem der vorstehenden Ansprüche, wobei die Einschlüsse eine durchschnittliche Größe zwischen 1 und 50 mm, vorzugsweise zwischen 2 und 40 mm und noch mehr bevorzugt zwischen 5 und 25 mm aufweisen.

10. Verfahren nach einem der vorstehenden Ansprüche, wobei nach dem Ablegen der erwärmten Schokolade ein Vibrationsschritt vorgesehen ist, der eine homogene Verteilung der erwärmten Schokolade in der Form (100, 200, 300) ermöglicht.

11. Verfahren nach einem der vorstehenden Ansprüche, wobei die Einschlüsse, die in der Form (100, 200, 300) verteilt sind, Haselnüsse, Mandeln, Paranüsse, Kaschunüsse oder Mischungen davon mit weichen Früchten, vorzugsweise Rosinen, Cranberrys, Blaubeeren, sind.

12. Schokoladenprodukt (400), das eine flache untere Seite und eine profilierte Seite aufweist, die der flachen unteren Seite gegenüberliegt,
wobei auf den profilierten Seiten Einschlüsse in dem Schokoladenmaterial eingebettet sind, derart, dass sie sichtbar sind und die äußere Seite der Einschlüsse der profilierten Kontur der profilierten Seite folgt,
wobei die Einschlüsse Nüsse sind,
wobei das Schokoladenprodukt eine Höhe h aufweist, die von dem flachen Boden zu dem Höchstpunkt der profilierten Seite gemessen wird,
wobei die Einschlüsse nur in einem Abstand von weniger als 0,5 *h,* vorzugsweise weniger als 0,3 *h,*
aber mehr als 0,05 *h*, vorzugsweise mehr als *0,1 h*, eingearbeitet sind.

13. Schokoladenprodukt nach Anspruch 12, wobei die Einschlüsse mindestens 25 %, vorzugsweise mindestens 30 %, noch mehr bevorzugt mehr als 40 % und vorzugsweise weniger als 95 % der Oberfläche der profilierten Seite darstellen, wobei der Rest Schokoladenmaterial ist.

## Revendications

1. Procédé permettant de fabriquer un produit de chocolat (400), en particulier des tablettes de chocolat ou des barres de chocolat, ayant des inclusions visibles, de préférence particulaires (440) constituées d'un matériau comestible non-chocolat, comprenant au moins les étapes suivantes :
- fourniture d'un moule (100, 200, 300) ;
- fourniture d'inclusions comprenant des fruits à coques ;
- fourniture de chocolat chauffé ayant une viscosité entre 1000 et 15 000 mPa.s, de préférence entre 2500 et 12 000 mPa.s, et même plus préférablement entre 5000 et 10 000 mPa.s ;
- distribution des inclusions sur le moule (100, 200, 300) de telle sorte que les inclusions reposent au moins partiellement dans la section inférieure incurvée de l'au moins un élément de cavité (110, 310, 320) du moule (100, 200, 300) ;
- dépôt du chocolat chauffé dans le moule (100, 200, 300) de telle sorte que les fruits à coques agencés restent sensiblement en place ;
- refroidissement du chocolat chauffé jusqu'à ce que le chocolat se solidifie ;
- retrait du chocolat solidifié hors du moule (100, 200, 300).
dans lequel le moule (100, 200, 300) comprend au moins un élément de cavité (110, 310, 320) dans lequel des inclusions et du chocolat peuvent être remplis, dans lequel l'élément de cavité (110, 310, 320) comprend une section inférieure incurvée (120, 330, 340) et au moins une section de paroi latérale adjacente (130, 350, 360) s'étendant à partir de la section inférieure incurvée (120, 330, 340) jusqu'à un côté supérieur (140) du moule (100, 200, 300), dans lequel l'élément de cavité (110, 310, 320) a les dimensions suivantes :
- une profondeur maximale entre 10 et 80 mm ;
- une largeur maximale entre 8 et 100 mm, dans lequel le rapport de la profondeur maximale à la largeur maximale est compris entre 0,3 et 1,2 ;
- la section inférieure incurvée (120, 330, 340) a un rayon entre 4 et 50 mm ;
- l'au moins une section de paroi latérale (130, 350, 360) s'étend à partir du côté supérieur (140) du moule (100, 200, 300) jusqu'à une profondeur entre 4 et 70 mm.

2. Procédé selon la revendication 1, dans lequel la section inférieure incurvée (120, 330, 340) est au moins partiellement de forme cylindrique ou sphérique.

3. Procédé selon l'une des revendications 1 ou 2, dans lequel les sections de paroi latérale (130, 150, 350, 360) sont inclinées d'au moins 5° DEG par rapport à une ligne verticale.

4. Procédé selon l'une quelconque des revendications précédentes, dans lequel la longueur de l'élément de cavité (110, 310, 320) vaut au moins 10 mm.

5. Procédé selon l'une quelconque des revendications précédentes, dans lequel le moule (300) comprend au moins deux éléments de cavité adjacents (310, 320), dans lequel au moins deux sections de paroi latérale adjacentes (350, 360) des deux éléments de cavité adjacents (310, 320) convergent à une profondeur entre 4 et 70 mm en formant une section médiane incurvée (370).

6. Procédé selon la revendication 5, dans lequel la section médiane incurvée (370) a un rayon entre 0,5 et 5 mm.

7. Procédé selon l'une quelconque des revendications précédentes, dans lequel le moule (100, 200, 300) comprend au moins une section d'encoche incurvée (210) permettant de fournir une ligne de cassure prédéterminée (430) pour un produit de chocolat moulé (400).

8. Procédé selon la revendication 7, dans lequel la section d'encoche incurvée (210) est fournie à une profondeur entre la profondeur des sections de paroi latérale (120, 350, 360) et la profondeur maximale de l'élément de cavité (310, 320), dans lequel de préférence la section d'encoche incurvée (210) se termine dans un intervalle entre au moins 1 mm au-dessus de la profondeur maximale de l'élément de cavité (310, 320) et/ou au moins 1 mm sous la section médiane incurvée (370) des deux éléments de cavité adjacents (310, 320).

9. Procédé selon l'une quelconque des revendications précédentes, dans lequel les inclusions ont une taille moyenne entre 1 et 50 mm, de préférence entre 2 et 40 mm et même plus préférablement entre 5 et 25 mm.

10. Procédé selon l'une quelconque des revendications précédentes, dans lequel après dépôt du chocolat chauffé, on fournit une étape de vibration facilitant une distribution homogène du chocolat chauffé dans le moule (100, 200, 300).

11. Procédé selon l'une quelconque des revendications précédentes dans lequel les inclusions distribuées dans le moule (100, 200, 300) sont des noisettes, des amandes, des noix du Brésil, des noix de cajou, ou des mélanges de celles-ci avec des fruits mous, de préférence des raisins secs, des canneberges, des myrtilles.

12. Produit de chocolat (400) ayant un côté inférieur plat et un côté profilé opposé au côté inférieur plat,
dans lequel sur le côté profilé des inclusions sont noyées dans du matériau de chocolat de telle sorte qu'elles sont visibles et que le côté externe des inclusions suit le contour profilé du côté profilé,
les inclusions étant des fruits à coques,
dans lequel le produit de chocolat a une hauteur h mesurée à partir du fond plat jusqu'à la crête la plus élevée du côté profilé,
dans lequel les inclusions sont uniquement incorporées sur une distance inférieure à 0,5 *h,* de préférence inférieure à 0,3 *h,*
mais supérieure à 0,05 *h,* de préférence supérieure à 0,1 *h.*

13. Produit de chocolat selon la revendication 12, dans lequel les inclusions représentent au moins 25 %, de préférence au moins 30 %, encore plus préférablement plus de 40 % et de préférence moins de 95 %, de la surface du côté profilé, le reste étant du matériau de chocolat.
